# FASCICULE DE BREVET EUROPEEN

(11) **EP 4 368 516 B1**
(45) Date de publication et mention de la délivrance du brevet: **22.01.2025**
(21) Numéro de dépôt: 23198992.2
(22) Date de dépôt: 22.09.2023
(51) Int. Cl.: B64D 37/04, B64D 37/30, F17C 13/08

(54) **SYSTÈME DE FIXATION POUR AÉRONEF DESTINÉ À FIXER AU MOINS UN RÉSERVOIR PRÉVU POUR CONTENIR DE L HYDROGÈNE LIQUIDE AUTORISANT UN ACCÈS FACILE AU RÉSERVOIR**
BEFESTIGUNGSSYSTEM FÜR EIN FLUGZEUG ZUR BEFESTIGUNG MINDESTENS EINES TANKS ZUR AUFNAHME VON FLÜSSIGEM WASSERSTOFF MIT EINFACHEM ZUGANG ZU EINEM TANK
AIRCRAFT ATTACHMENT SYSTEM FOR ATTACHING AT LEAST ONE TANK DESIGNED TO CONTAIN LIQUID HYDROGEN, ALLOWING EASY ACCESS TO THE TANK

(30) Priorité: 08.11.2022 FR 2211631
(43) Date de publication de la demande: 15.05.2024
(73) Titulaire: AIRBUS OPERATIONS (S.A.S.), 31060 Toulouse (FR)
(72) Inventeur: MERTES, Anthony, 31060 TOULOUSE (FR)
(74) Mandataire: Airbus-OPS SAS

(56) Documents cités:
- EP-B1- 3 524 526
- US-A1- 2015 360 791
- US-A1- 2022 289 401

## Description

### Domaine technique

La présente invention concerne un système de fixation pour aéronef configuré pour fixer au moins un réservoir prévu pour contenir de l'hydrogène liquide. Ce système autorise un accès facile au réservoir par un opérateur.

### État de la technique

Pour se déplacer, un aéronef comporte des systèmes de propulsion comprenant au moins un moteur. Les systèmes de propulsion peuvent correspondre à des turboréacteurs ou des turbopropulseurs dans lesquels un moteur entraîne une hélice en rotation.

Les moteurs de ces systèmes de propulsion peuvent correspondre à des moteurs à combustion interne alimentés par de l'hydrogène liquide. Ces moteurs peuvent également correspondre à des moteurs électriques alimentés par des piles à combustibles. Afin alimenter ces moteurs, il est nécessaire d'embarquer des réservoirs à hydrogène liquide.

Ces réservoirs peuvent être embarqués l'un à côté de l'autre dans un tronçon de fuselage de l'aéronef. Pour être embarqués à bord de l'aéronef, les réservoirs demandent d'être fixés de manière sécurisée. Par ailleurs, il peut être nécessaire que le ou les logements dans lesquels sont embarqués les réservoirs soient suffisamment grands pour faciliter la fixation du ou des réservoirs par un opérateur et/ou une maintenance de la fixation du ou des réservoirs.

US2022/289401 A1 divulgue un corps d'écoulement pour un aéronef comprenant une boîte de torsion, dans laquelle un réservoir de gaz est disposé dans la boîte de torsion. Le réservoir de gaz comprend des éléments de fixation couplés à des éléments de retenue afin de maintenir le réservoir de gaz dans la boîte de torsion.

US 2015/360791 A1 divulgue un dispositif de retenue de réservoir pour retenir un réservoir dans le fuselage d'un aéronef, comprenant des moyens de retenue articulés et une tige de fixation entre le réservoir et un cadre rigidement relié au fuselage de l'aéronef.

### Exposé de l'invention

La présente invention a pour objet de donner une solution à la fixation de réservoirs embarqués à bord de l'aéronef tout en permettant un accès aux réservoirs par un opérateur.

Pour cela, elle concerne un système de fixation configuré pour fixer au moins un réservoir prévu pour contenir de l'hydrogène liquide, le ou les réservoirs présentant un centre de gravité, le système de fixation étant destiné à être intégré dans un corps de fuselage d'un aéronef, le système de fixation étant lié à un repère orthogonal défini par un axe X destiné à être parallèle à un axe longitudinal du corps de fuselage, un axe Y horizontal et un axe Z vertical, le système de fixation présentant un plan de symétrie vertical perpendiculaire à l'axe Y.

Selon l'invention, le système de fixation comprend :
- un caisson longitudinal s'étendant parallèlement à l'axe X et présentant un plan de symétrie confondu avec le plan de symétrie vertical,
- une pluralité de cintres supérieurs perpendiculaires à l'axe X et fixés à une extrémité supérieure du caisson longitudinal, les cintres supérieurs de la pluralité de cintres supérieurs étant répartis le long de l'axe X, la pluralité de cintres supérieurs comportant au moins deux cintres supérieurs de fixation présentant chacun deux dispositifs de fixation de part et d'autre du caisson longitudinal pour lier chacun un premier point de fixation d'au moins un réservoir aux cintres supérieurs de fixation par une liaison pivot glissant d'axe pivot parallèle à l'axe X, l'axe pivot étant configuré pour être compris dans un plan perpendiculaire à l'axe Y comportant le centre de gravité du réservoir,
- une pluralité de cintres inférieurs perpendiculaires à l'axe X et fixés à une extrémité inférieure du caisson longitudinal, les cintres inférieurs de la pluralité de cintres inférieurs étant répartis le long de l'axe X, la pluralité de cintre inférieurs comportant au moins un cintre inférieur de fixation présentant deux deuxièmes dispositifs de fixation de part et d'autre du caisson longitudinal pour lier chacun un deuxième point fixation du ou des réservoirs au ou aux cintres inférieurs de fixation, le premier point de fixation et le deuxième point de fixation d'un réservoir étant susceptibles d'être compris dans un plan perpendiculaire à l'axe Y et comprenant le centre de gravité dudit réservoir.

Ainsi, le logement défini entre les cintres supérieurs, d'une part, et les cintres inférieurs, d'autre part, est agrandi par rapport à un logement de l'art antérieur, ce qui facilite l'intégration du ou des réservoirs et une maintenance de la fixation du ou des réservoirs.

Selon une particularité, le système de fixation comprend deux panneaux supérieurs s'étendant parallèlement à l'axe X et perpendiculairement à l'axe Z, les deux panneaux supérieurs étant disposés symétriquement par rapport au plan de symétrie vertical de part et d'autre du caisson longitudinal, chacun des deux panneaux supérieurs étant fixé aux cintres supérieurs.

Par ailleurs, le système de fixation comprend au moins deux troisièmes dispositifs de fixation fixés aux deux panneaux supérieurs symétriquement par rapport au plan de symétrie vertical, les au moins deux troisièmes dispositifs de fixation étant configurés pour lier chacun un troisième point de fixation respectif du réservoir à un panneau supérieur.

Selon une autre particularité, le système de fixation comprend deux panneaux inférieurs s'étendant parallèlement à l'axe X et perpendiculairement à l'axe Z, les deux panneaux inférieurs tant disposés symétriquement par rapport au plan de symétrie vertical de part et d'autre du caisson longitudinal, chacun des deux panneaux inférieurs étant fixé aux cintres inférieurs.

Avantageusement, le système de fixation comprend en outre deux longerons supérieurs s'étendant parallèlement à l'axe X et disposés symétriquement de part et d'autre du plan de symétrie vertical, chacun des cintres supérieurs présentant une extrémité longitudinale de chaque côté du plan de symétrie verticale, chacun des deux longerons supérieurs étant fixé à chaque extrémité des cintres supérieurs située du même côté du plan de symétrie vertical.

De plus, le système de fixation comprend en outre deux longerons inférieurs s'étendant parallèlement à l'axe X et disposés symétriquement de part et d'autre du plan de symétrie vertical, chacun des cintres inférieurs présentant une extrémité longitudinale de chaque côté du plan de symétrie verticale, chacun des deux longerons inférieurs étant fixé à chaque extrémité des cintres supérieurs située du même côté du plan de symétrie vertical.

En outre, chacun des deux premiers dispositifs de fixation comprend une plaque de fixation double perpendiculaire à l'axe X, la plaque de fixation double est percée d'un orifice permettant le passage de l'axe pivot, la plaque de fixation double étant fixée à une extrémité d'un cintre supérieur de fixation.

De plus, chacun des deux deuxièmes dispositifs de fixation comprend :
- une première plaque triangulaire double comprise dans un plan vertical perpendiculaire à l'axe X, la première plaque triangulaire double étant fixée à un cintre inférieur de fixation par un côté de fixation de la première plaque triangulaire double, le côté de fixation étant opposé à un sommet de fixation de la première plaque triangulaire double,
- deux premières biellettes doubles parallèles à l'axe Y, les deux premières biellettes doubles présentant une première extrémité liée au sommet de fixation par une première liaison pivot d'axe X, les deux premières biellettes doubles présentant une deuxième extrémité destinée à être liée au réservoir par une deuxième liaison pivot d'axe X.

De plus, chacun des deux troisièmes dispositifs de fixation comprend :
- une deuxième plaque triangulaire double comprise dans un plan vertical perpendiculaire à l'axe Y, la deuxième plaque triangulaire double étant fixée au panneau supérieur par un côté de fixation de la deuxième plaque triangulaire double, le côté de fixation étant opposé à un sommet de fixation de la deuxième plaque triangulaire double,
- deux deuxièmes biellettes doubles parallèles à l'axe X, les deux deuxièmes biellettes doubles présentant une première extrémité liée au sommet de fixation par une première liaison pivot d'axe Y, les deux deuxièmes biellettes doubles présentant une deuxième extrémité destinée à être liée au réservoir par une deuxième liaison pivot d'axe Y.

Par ailleurs, le caisson longitudinal comprend au moins deux plaques longitudinales parallèles au plan de symétrie vertical et symétriques l'un par rapport à l'autre par rapport au plan de symétrie vertical.

Selon un mode de réalisation, chacun des cintres supérieurs comprenant une paire de demi-cintres supérieurs fixés au caisson longitudinal symétriquement de part et d'autre du plan de symétrie vertical et un centre de cintre supérieur fixé entre les demi-cintres supérieurs et entre les deux plaques longitudinales,
chacun des cintres inférieurs comprenant une paire de demi-cintres inférieurs fixés au caisson longitudinal symétriquement de part et d'autre du plan de symétrie vertical et un centre de cintre inférieur fixé entre les demi-cintres inférieurs et entre les deux plaques longitudinales.

En outre, le demi-cintre supérieur de chacune des paires de demi-cintres supérieurs comporte dans un plan vertical perpendiculaire au plan de symétrie vertical un montant vertical, une traverse horizontale, une entretoise et une poutre cintrée,
le montant vertical étant fixé à une plaque longitudinale du caisson longitudinal, la poutre cintrée s'étendant à partir de l'extrémité supérieure du montant vertical,
la poutre cintrée étant configurée pour épouser une surface interne d'une coque supérieure du corps de fuselage de l'aéronef et pour être fixée à ladite surface interne,
la traverse horizontale s'étendant à partir de l'extrémité inférieure du montant vertical,
la poutre cintrée et la traverse horizontale se rapprochant l'une de l'autre à l'opposé du caisson longitudinal et sont reliées entre elles par l'intermédiaire de l'entretoise, chacun des deux longerons supérieurs étant fixé à l'entretoise de chacun des demi-cintres supérieurs située du même côté du plan de symétrie vertical,
chacun des deux panneaux supérieurs étant fixé à la traverse horizontal de chacun des demi-cintres supérieurs situés du même côté du plan de symétrie vertical,
le centre de cintre supérieur de chacun des cintres supérieurs présentant une forme rectangulaire dont deux côtés opposés sont fixés respectivement à une plaque longitudinale du caisson longitudinal de façon qu'une extrémité supérieure du montant vertical soit à la hauteur d'un côté supérieur du centre de cintre supérieur et qu'une extrémité inférieure du montant vertical soit à la hauteur d'un côté inférieur du centre de cintre supérieur.

De plus, le demi-cintre inférieur de chacune des paires de demi-cintres inférieurs comporte dans un plan vertical perpendiculaire au plan de symétrie vertical une traverse horizontale et une poutre cintrée,
le centre de cintre inférieur de chacun des cintres inférieurs présentant une forme rectangulaire dont deux côtés opposés sont fixés respectivement à une plaque longitudinale du caisson longitudinal entre les deux plaques longitudinales,
la poutre cintrée présentant une première extrémité fixée à une plaque longitudinale du caisson longitudinal à la hauteur d'un côté inférieur du centre de cintre inférieur, la poutre cintrée étant configurée pour épouser une surface interne d'une coque inférieure du corps de fuselage de l'aéronef et pour être fixée à ladite surface interne,
la traverse horizontale présentant une première extrémité fixée à la plaque longitudinale du caisson longitudinal la hauteur d'un côté supérieur du centre de cintre inférieur,
la poutre cintrée et la traverse horizontale se rapprochant l'une de l'autre à l'opposé de leur première extrémité respective et sont reliées entre elles à leur deuxième extrémité par l'intermédiaire du longeron inférieur situé du même côté du plan de symétrie vertical,
chacun des deux panneaux inférieurs étant fixé à la traverse horizontal de chacun des demi-cintres inférieurs situés du même côté du plan de symétrie vertical.

L'invention concerne également un aéronef, en particulier un avion de transport, intégrant un système de fixation tel que spécifié ci-dessus.

Par ailleurs, l'aéronef comprend au moins un réservoir prévu pour contenir de l'hydrogène liquide, le ou les réservoirs étant fixés au système de fixation.

### Brève description des figures

Les figures annexées feront bien comprendre comment l'invention peut être réalisée. Sur ces figures, des références identiques désignent des éléments semblables.
La figure 1 représente une vue en perspective d'un aéronef présentant un fuselage intégrant un système de fixation auquel sont fixés deux réservoirs.
La figure 2 représente une vue en perspective d'un système de fixation auquel sont fixés deux réservoirs.
La figure 3 représente une vue de derrière du système de fixation.
La figure 4 représente une vue de derrière d'une partie d'un cintre supérieur de fixation et d'un cintre inférieur de fixation.
La figure 5 représente une vue de profil du système de fixation auquel est fixé un réservoir.
La figure 6 représente une vue en perspective du premier dispositif de fixation.
La figure 7 représente une vue en perspective du deuxième dispositif de fixation.
La figure 8 représente une vue en perspective du troisième dispositif de fixation.
La figure 9 représente une vue en perspective d'un panneau inférieur.
La figure 10 représente une vue en perspective d'un panneau supérieur.

### Description détaillée

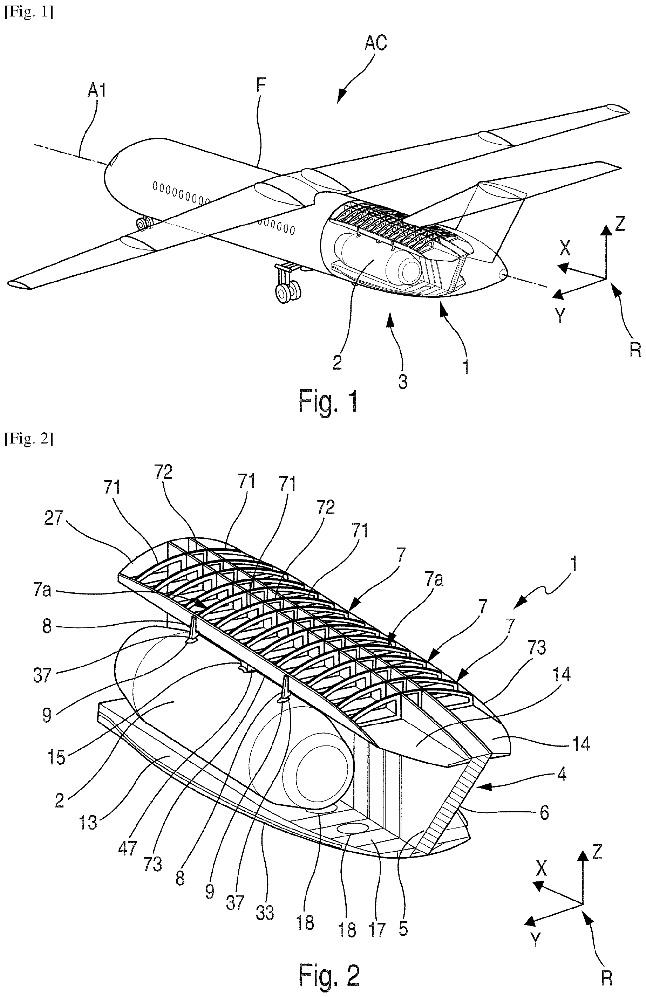

Le système de fixation 1 est destiné à être intégré dans le fuselage F d'un aéronef AC (figure 1). Le système de fixation 1 peut être rendu solidaire au fuselage F de l'aéronef AC.

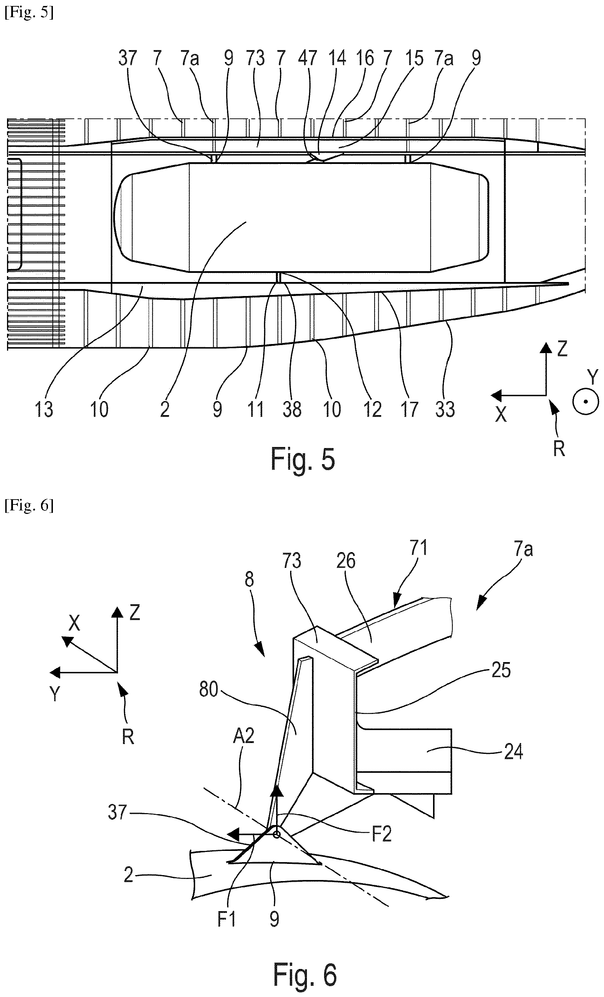

Le système de fixation 1 représenté sur la figure 2 et la figure 5 est liée à un repère orthogonal R défini par un axe X destiné à être parallèle à un axe longitudinal A1 du corps de fuselage 3 de l'aéronef AC dans lequel le système de fixation 1 est destiné à être intégré (Figure 1). Le repère orthogonal R est également défini par un axe Y et un axe Z. L'axe Y correspond à une direction transversale du système de fixation 1 perpendiculaire à l'axe X. L'axe Y est horizontal quand l'aéronef AC, destiné à recevoir le corps de fuselage 3 intégrant le système de fixation 1, se trouve au sol. L'axe Z correspond à la direction verticale du système de fixation 1 perpendiculaire à l'axe X et à l'axe Y. Le système de fixation 1 comprend un plan de symétrie vertical P1. On appelle « plan de symétrie vertical P1 » le plan parallèle à l'axe X et à l'axe Z (ou le plan perpendiculaire à l'axe Y) qui correspond au plan de symétrie vertical du système de fixation 1.

Les adjectifs « supérieur » et « inférieur » sont définis par rapport au sol sur lequel l'aéronef AC devant recevoir le système de fixation 1 est susceptible d'avancer. Un objet qualifié par l'adjectif « inférieur » se situe plus proche du sol que le même objet qualifié par l'adjectif « supérieur ».

Le système de fixation 1 est configuré pour fixer au moins un réservoir 2 prévu pour contenir de l'hydrogène liquide. Le système de fixation 1 prévoit que deux réservoirs 2 peuvent être fixés l'un à côté de l'autre de part et d'autre du plan de symétrie vertical P1. Le ou les réservoirs 2 présentent un centre de gravité CG. On peut considérer que le centre de gravité CG du ou de chacun des réservoirs 2 reste sensiblement à la même position quelle que soit la quantité d'hydrogène liquide contenue dans le ou les réservoirs 2.

Le système de fixation 1 est destiné à être intégré dans un corps de fuselage 3 d'un aéronef AC.

Comme représenté sur la figure 2, le système de fixation 1 comprend au moins un caisson longitudinal 4, une pluralité de cintres supérieurs 7 et une pluralité de cintres inférieurs 10.

Le caisson longitudinal 4 s'étend parallèlement à l'axe X et présente un plan de symétrie confondu avec le plan de symétrie vertical P1. Le caisson longitudinal 4 peut s'étendre sur toute la longueur du système de fixation 1 selon l'axe X.

Chacun des cintres supérieurs 7 de la pluralité de cintres supérieurs 7 est perpendiculaire à l'axe X. Chacun des cintres supérieurs 7 est fixé à une extrémité supérieure du caisson longitudinal 4. Les cintres supérieurs 7 de la pluralité de cintres supérieurs 7 sont répartis le long de l'axe X.

La pluralité de cintres supérieurs 7 comporte au moins deux cintres supérieurs de fixation 7a présentant chacun deux dispositifs de fixation 8 situés de part et d'autre du caisson longitudinal 4 pour lier chacun un premier point de fixation 9 d'au moins un réservoir 2 aux cintres supérieurs de fixation 7a. Les premiers dispositifs de fixation 8 peuvent être disposés symétriquement de part et d'autre du plan de symétrie vertical P1.

De préférence, chacun des deux premiers dispositifs de fixation 8 est configuré pour lier le ou les réservoirs 2 à un cintre supérieur de fixation 7a par une liaison pivot glissant d'axe pivot A2 parallèle à l'axe X. L'axe pivot A2 est configuré pour être compris dans un plan perpendiculaire à l'axe Y comportant le centre de gravité CG du réservoir 2. Chacun des deux premiers dispositifs de fixation 8 est configuré pour permettre un transfert de charge F1 et F2 (figure 6) selon l'axe Y et l'axe Z, respectivement.

Chacun des cintres inférieurs 10 de la pluralité de cintres inférieurs 10 est perpendiculaire à l'axe X. Chacun des cintres inférieurs 10 est fixé à une extrémité inférieure du caisson longitudinal 4. Les cintres inférieurs 10 de la pluralité de cintres inférieurs 10 sont répartis le long de l'axe X.

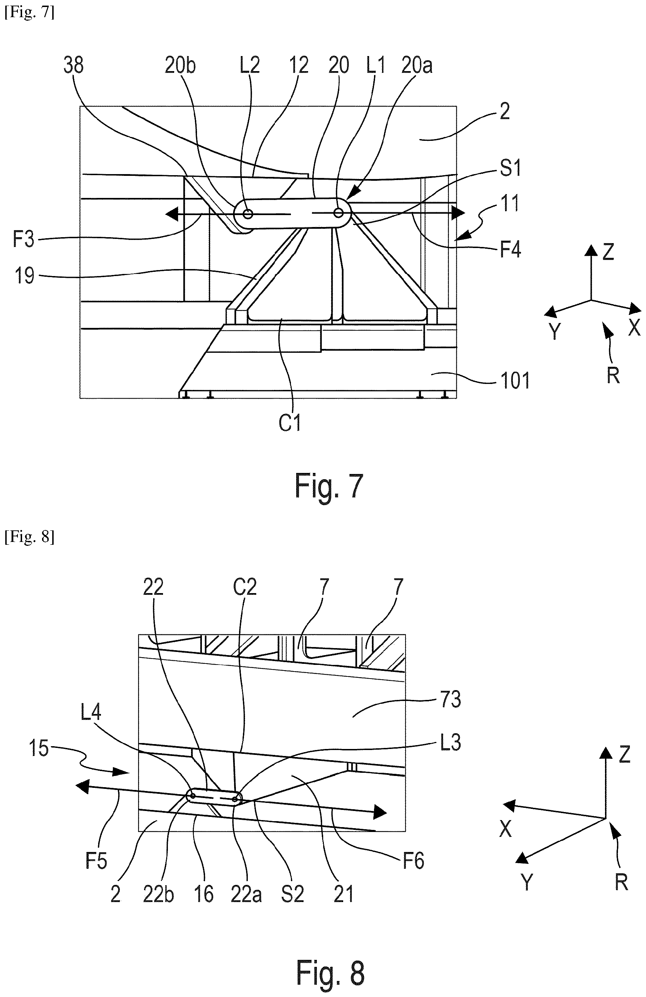

La pluralité de cintre inférieurs 10 comporte au moins un cintre inférieur de fixation 10a présentant deux deuxièmes dispositifs de fixation 11 de part et d'autre du caisson longitudinal 4 pour lier chacun un deuxième point fixation 12 du ou des réservoirs 2 au ou aux cintres inférieurs de fixation 10a. Les deuxièmes dispositifs de fixation 11 peuvent être disposés symétriquement de part et d'autre du plan de symétrie vertical P1. Chacun des deux deuxièmes dispositifs de fixation 11 est configuré pour permettre un transfert de charges F3, F4 selon l'axe Y (figure 7).

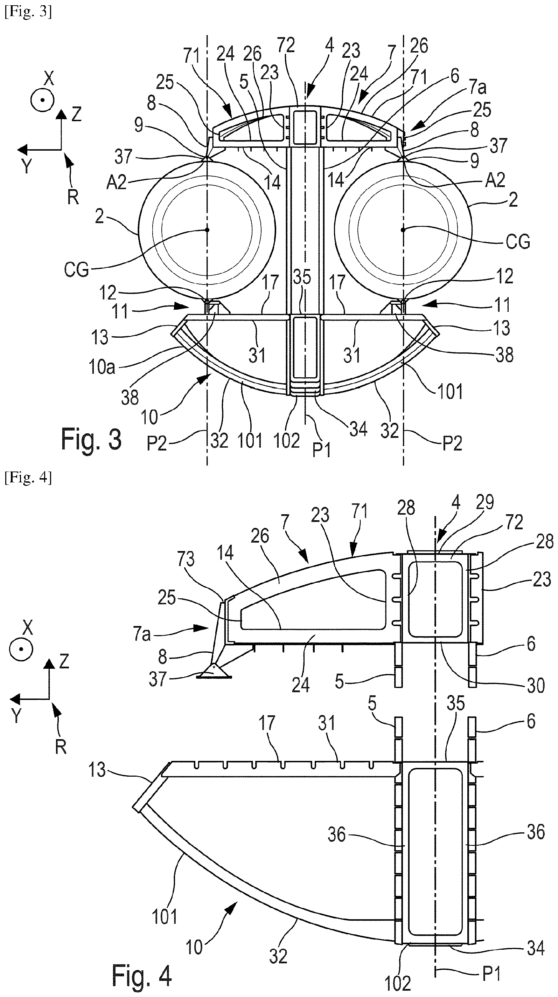

Le premier point de fixation 9 et le deuxième point de fixation 12 d'un réservoir 2 sont susceptibles d'être compris dans un plan P2 perpendiculaire à l'axe Y et comprenant le centre de gravité CG dudit réservoir 2 (figure 3). Avantageusement, le premier point de fixation 9 est situé dans une partie supérieure du réservoir 2. Le deuxième point de fixation 12 est situé dans une partie inférieure du réservoir 2.

De façon non limitative, le logement défini entre les cintres supérieurs 7, d'une part, et les cintres inférieurs 10, d'autre part, autorise un espace d'au moins 200 mm autour du ou des réservoirs 2 quand il ou ils sont fixés au système de fixation 1.

De plus, le système de fixation 1 peut comprendre deux panneaux supérieurs 14 s'étendant parallèlement à l'axe X et perpendiculairement à l'axe Z. Les deux panneaux supérieurs 14 sont disposés symétriquement par rapport au plan de symétrie vertical P1 de part et d'autre du caisson longitudinal 4. Les deux panneaux supérieurs 14 s'étendent sur toute la longueur du système de fixation 1 selon l'axe X. Chacun des deux panneaux supérieurs 14 est fixé aux cintres supérieurs 71.

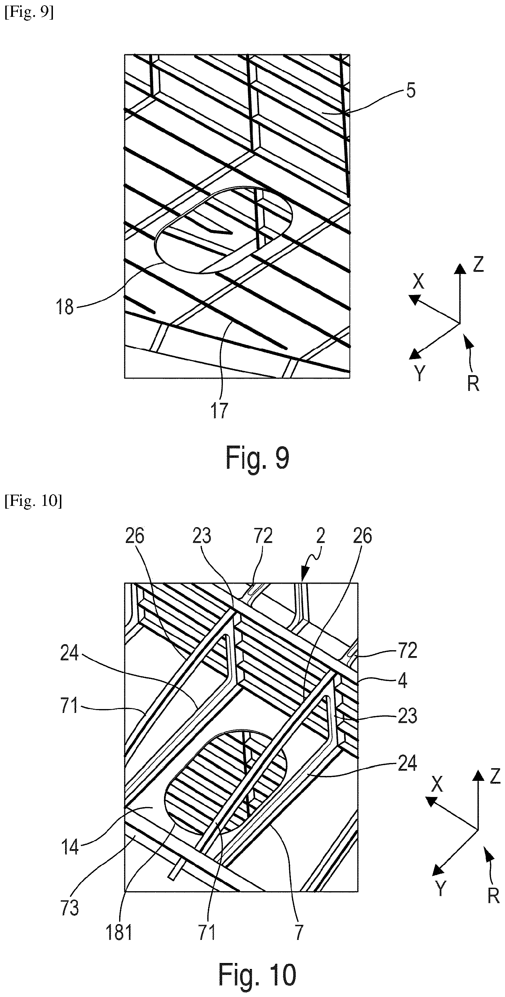

Comme représenté sur la figure 10, les deux panneaux supérieurs 14 peuvent comprendre chacun au moins un trou d'homme 181 configuré pour autoriser à un opérateur un passage de part et d'autre de chacun des deux panneaux supérieurs 14. Comme représenté sur la figure 10, le trou d'homme 181 est, de préférence, agencé entre deux cintres supérieurs 7.

Le système de fixation 1 peut aussi comprendre deux panneaux inférieurs 17 s'étendant parallèlement à l'axe X et perpendiculairement à l'axe Z, les deux panneaux inférieurs 17 sont disposés symétriquement par rapport au plan de symétrie vertical P1 de part et d'autre du caisson longitudinal 4. Les deux panneaux inférieurs 17 s'étendent sur toute la longueur du système de fixation 1 selon l'axe X. Chacun des deux panneaux inférieurs 17 est fixé aux cintres inférieurs 10.

Comme représenté sur la figure 9, les deux panneaux inférieurs 17 peuvent comprendre chacun au moins un trou d'homme 18 configuré pour autoriser à un opérateur un passage de part et d'autre de chacun des deux panneaux inférieurs 17. Le trou d'homme 18 est, de préférence, agencé entre deux demi-cintres inférieurs 101.

Le système de fixation 1 peut comprendre au moins deux troisièmes dispositifs de fixation 15 fixés aux deux panneaux supérieurs 14 symétriquement par rapport au plan de symétrie vertical P1. Les au moins deux troisièmes dispositifs de fixation 15 sont configurés pour lier chacun un troisième point de fixation 16 respectif du réservoir 2 à un panneau supérieur 14 respectif. Chacun des au moins deux deuxièmes dispositifs de fixation 15 est configuré pour permettre un transfert de charges F5, F6 selon l'axe X (figure 8).

Le troisième point de fixation 16 peut être compris dans un plan perpendiculaire à l'axe Y. Ce plan peut être compris entre le plan de symétrie vertical P1 et le plan comprenant le premier point de fixation 9, les deux deuxièmes points de fixation 12 et le centre de gravité CG du réservoir 2.

Avantageusement, le système de fixation 1 comprend en outre deux longerons supérieurs 73 s'étendant parallèlement à l'axe X et disposés symétriquement de part et d'autre du plan de symétrie vertical P1. Chacun des cintres supérieurs 7 présente une extrémité longitudinale de chaque côté du plan de symétrie verticale P1. Chacun des deux longerons supérieurs 73 est fixé à chaque extrémité des cintres supérieurs 7 située du même côté du plan de symétrie vertical P1. Les deux longerons supérieurs 73 s'étendant selon l'axe X en épousant une surface interne d'une coque supérieure 27 du corps de fuselage 3 de l'aéronef AC.

Les deux longerons supérieurs 73 peuvent servir de référence pour positionner les dispositifs de fixations 9 et 15 qui reprennent le réservoir 2.

Avantageusement, le système de fixation 1 comprend en outre deux longerons inférieurs 13 s'étendant parallèlement à l'axe X et disposés symétriquement de part et d'autre du plan de symétrie vertical P1. Chacun des cintres inférieurs 10 présente une extrémité longitudinale de chaque côté du plan de symétrie verticale P1. Chacun des deux longerons inférieurs 13 est fixé à chaque extrémité des cintres supérieurs 10 située du même côté du plan de symétrie vertical P1. Les deux longerons supérieurs 13 s'étendant selon l'axe X en épousant une surface interne d'une coque inférieure 33 du corps de fuselage 3 de l'aéronef AC.

Dans la suite de la description, l'adjectif double qualifiant un élément signifie que ledit élément comprend deux éléments simples identiques accolés l'un à l'autre. Ainsi, une plaque double comprendre deux plaques simples identiques accolées l'une à l'autre. Une biellette double comprend deux biellettes simples identiques accolées l'une à l'autre.

Les efforts exercés sur un élément double (par exemple des efforts exercés par un réservoir 2) sont divisés en deux chemins d'efforts : une première partie des efforts s'exerce sur un premier élément simple et une deuxième partie des efforts s'exerce sur le deuxième élément simple. Ainsi, s'il survient une rupture d'un des deux éléments simples, l'autre élément simple (qui ne s'est pas rompu) a la capacité à reprendre tous les efforts. De préférence, les deux éléments simples ne sont pas fixés ensemble afin que, si un premier élément simple venait à rompre, la rupture de ce premier élément simple n'entraînerait pas la rupture du deuxième élément simple.

Selon un mode de réalisation, chacun des deux premiers dispositifs de fixation 8 comprend une plaque de fixation double 80 perpendiculaire à l'axe X. La plaque de fixation double 80 est percée d'un orifice permettant le passage de l'axe pivot A2. La plaque de fixation double 80 de chacun des deux premiers dispositifs de fixation 8 fixée à une extrémité d'un cintre supérieur de fixation 7a. Ainsi, les deux premiers dispositifs de fixation 8 d'un contre supérieur de fixation 7a sont fixés à des extrémités opposées dudit cintre supérieur de fixation 7a.

Selon un mode de réalisation, chacun des deux deuxièmes dispositifs de fixation 11 comprend une première plaque triangulaire double 19 et deux premières biellettes doubles 20 (figure 7).

La première plaque triangulaire double 19 est comprise dans un plan vertical perpendiculaire à l'axe X. La première plaque triangulaire double 19 présentant la forme d'un triangle ayant un côté de fixation C1 et un sommet de fixation S1 opposé au côté de fixation C1. La première plaque triangulaire double 19 est fixée à un cintre inférieur de fixation 10a par le côté de fixation C1.

Les deux premières biellettes doubles 20 sont parallèles à l'axe Y. Les deux premières biellettes doubles 20 présentent une première extrémité 20a liée au sommet de fixation S1 par une première liaison pivot L1 parallèle à l'axe X. Les deux premières biellettes doubles 20 présentent en outre une deuxième extrémité 20b destinée à être liée au réservoir 2 par une deuxième liaison pivot L2 parallèle à l'axe X.

Selon un mode de réalisation, chacun des deux troisièmes dispositifs de fixation 15 comprend une deuxième plaque triangulaire double 21 et deux deuxièmes biellettes doubles 22 (figure 8).

La deuxième plaque triangulaire double 21 est comprise dans un plan vertical perpendiculaire à l'axe Y. La deuxième plaque triangulaire double 21 présente la forme d'un triangle ayant un côté de fixation C2 et un sommet de fixation S2 opposé au côté de fixation C2. La deuxième plaque triangulaire double 21 est fixée au panneau supérieur 14 par le côté de fixation C2.

Les deux deuxièmes biellettes doubles 22 sont parallèles à l'axe X. Les deux deuxièmes biellettes doubles 22 présentent une première extrémité 22a liée au sommet de fixation S2 par une première liaison pivot L3 parallèle à l'axe Y. Les deux deuxièmes biellettes doubles 22 présentent une deuxième extrémité 22b destinée à être liée au réservoir 2 par une deuxième liaison pivot L4 parallèle à l'axe Y.

Selon un mode de réalisation, le caisson longitudinal 4 peut comprendre au moins deux plaques longitudinales 5, 6 parallèles au plan de symétrie vertical P1 et symétriques par rapport au plan de symétrie vertical P1. Les deux plaques longitudinales 5, 6 s'étendent sur toute la longueur du système de fixation 1 selon l'axe X et sur toute la hauteur du système de fixation 1 selon l'axe Z.

Selon un mode de réalisation, chacun des cintres supérieurs 7 peut comprendre une paire de demi-cintres supérieurs 71 fixés au caisson longitudinal 4 symétriquement de part et d'autre du plan de symétrie vertical P1. Chacun des cintres supérieurs 7 peut également comprendre un centre de cintre supérieur 72 fixé entre les demi-cintres supérieurs 71 et entre les deux plaques longitudinales 5, 6. Pour chacun des cintres supérieurs 7, la paire de demi-cintres supérieurs 71 et le centre de cintre supérieur 72 sont compris dans un même plan perpendiculaire à l'axe X.

Chacun des deux premiers dispositifs de fixation 8 peut être configuré pour lier un premier point de fixation 9 respectif du réservoir 2 à un demi-cintre supérieur 71. Par exemple, chacun des deux premiers dispositifs de fixation 8 est disposé à une extrémité d'un demi-cintre supérieur 71 à l'opposé du caisson longitudinal 4. Avantageusement, chacun des deux longerons supérieurs 73 est fixé à l'entretoise 25 de chacun des demi-cintres supérieurs 71 située du même côté du plan de symétrie vertical P1.

Selon un mode de réalisation, chacun des cintres inférieurs 10 peut comprendre une paire de demi-cintres inférieurs 101 fixés au caisson longitudinal 4 symétriquement de part et d'autre du plan de symétrie vertical P1. Chacun des cintres inférieurs 10 peut également comprendre un centre de cintre inférieur 102 fixé entre les demi-cintres inférieurs 101 et entre les deux plaques longitudinales 5, 6. Pour chacun des cintres inférieurs 10, la paire de demi-cintres inférieurs 101 et le centre de cintre inférieur 102 sont compris dans un même plan perpendiculaire à l'axe X.

Chacun des deux deuxièmes dispositifs de fixation 11 peut être configuré pour lier un deuxième point fixation 12 respectif du réservoir 2 à un demi-cintre inférieur 101 d'un cintre inférieur de fixation 10a.

Selon un mode de réalisation, le demi-cintre supérieur 71 de chacune des paires de demi-cintres supérieurs 71 comporte, dans un plan vertical perpendiculaire au plan de symétrie vertical P1 : un montant vertical 23, une traverse horizontale 24, une entretoise 25 et une poutre cintrée 26.

Le montant vertical 23 est fixé à une plaque longitudinale 5, 6 du caisson longitudinal 4.

La poutre cintrée 26 est configurée pour épouser la surface interne de la coque supérieure 27 du corps de fuselage 3 de l'aéronef AC. La poutre cintrée est également configurée pour être fixée à ladite surface interne.

La poutre cintrée 26 s'étend à partir de l'extrémité supérieure du montant vertical 23 en suivant la surface interne de la coque supérieure 27. La traverse horizontale 24 s'étend parallèlement à l'axe Y à partir de l'extrémité inférieure du montant vertical 23.

La poutre cintrée 26 et la traverse horizontale 24 se rapprochent l'une de l'autre à l'opposé du caisson longitudinal 4 et sont reliées entre elles par l'intermédiaire de l'entretoise 25.

Avantageusement, chacun des deux longerons supérieurs 73 est fixé à l'entretoise 25 de chacun des demi-cintres supérieurs 71 située du même côté du plan de symétrie vertical P1.

Le centre de cintre supérieur 72 de chacun des cintres supérieurs 7 présente une forme rectangulaire. Il peut correspondre à un cadre rectangulaire. Le centre de cintre supérieur 72 présente deux côtés opposés 28, un côté supérieur 29 et un côté inférieur 30. Les deux côtés opposés sont fixés respectivement à une plaque longitudinale 5, 6 du caisson longitudinal 4 de façon qu'une extrémité supérieure du montant vertical 23 soit à la hauteur du côté supérieur 29 du centre de cintre supérieur 72 et qu'une extrémité inférieure du montant vertical 23 soit à la hauteur du côté inférieur 30 du centre de cintre supérieur 72. Dans ce mode de réalisation, chacun des deux panneaux supérieurs 14 peut être fixé à la traverse horizontal 24 de chacun des demi-cintres supérieurs 71 situés du même côté du plan de symétrie vertical P1.

Selon un mode de réalisation, le demi-cintre inférieur 101 de chacune des paires de demi-cintres inférieurs 101 comporte, dans un plan vertical perpendiculaire au plan de symétrie vertical P1 : une traverse horizontale 31 et une poutre cintrée 32.

Le centre de cintre inférieur 102 de chacun des cintres inférieurs 10 présente une forme rectangulaire. Il peut correspondre à un cadre rectangulaire. Le centre de contre inférieur 101 présente un côté supérieur 35, un côté inférieur 34 et deux côtés opposés 36. Les deux côtés opposés 36 sont fixés respectivement à une plaque longitudinale 5, 6 du caisson longitudinal 4 entre les deux plaques longitudinales 5, 6.

La poutre cintrée 32 présente une première extrémité fixée à une plaque longitudinale 5, 6 du caisson longitudinal 4 à la hauteur d'un côté inférieur 34 du centre de cintre inférieur 102. La poutre cintrée 32 est configurée pour s'étendre à partir de sa première extrémité en épousant la surface interne de la coque inférieure 33 du corps de fuselage 3 de l'aéronef AC. La poutre cintrée 32 est également configurée pour être fixée à ladite surface interne.

La traverse horizontale 31 présente une première extrémité fixée à la plaque longitudinale 5, 6 du caisson longitudinal 4 à la hauteur d'un côté supérieur 35 du centre de cintre inférieur 102. La traverse horizontale 31 est configurée pour s'étendre à partir de sa première extrémité parallèlement à l'axe Y.

La poutre cintrée 32 et la traverse horizontale 31 se rapprochant l'une de l'autre à l'opposé de leur première extrémité respective et sont reliées entre elles à leur deuxième extrémité par l'intermédiaire du longeron inférieur 13 situé du même côté du plan de symétrie vertical P1.

Avantageusement, chacun des deux longerons inférieurs 13 est fixé à la deuxième extrémité de la poutre cintrée 32 et la deuxième extrémité de la traverse horizontale 31 de chacun des demi-cintres inférieurs 101 située du même côté du plan de symétrie vertical P1.

Dans ce mode de réalisation, chacun des deux panneaux inférieurs 17 peut être fixé à la traverse horizontal 31 de chacun des demi-cintres inférieurs 101 situés du même côté du plan de symétrie vertical P1.

## Revendications

1. Système de fixation (1) configuré pour fixer au moins un réservoir (2) prévu pour contenir de l'hydrogène liquide, le ou les réservoirs (2) présentant un centre de gravité (CG), le système de fixation (1) étant destiné à être intégré dans un corps de fuselage (3) d'un aéronef (AC), le système de fixation (1) étant lié à un repère orthogonal (R) défini par un axe X destiné à être parallèle à un axe longitudinal (A1) du corps de fuselage (3), un axe Y horizontal et un axe Z vertical, le système de fixation (1) présentant un plan de symétrie vertical (P1) perpendiculaire à l'axe Y, le système de fixation comprenant:
- un caisson longitudinal (4) s'étendant parallèlement à l'axe X et présentant un plan de symétrie confondu avec le plan de symétrie vertical (P1),
- une pluralité de cintres supérieurs (7) perpendiculaires à l'axe X et fixés à une extrémité supérieure du caisson longitudinal (4), les cintres supérieurs (7) de la pluralité de cintres supérieurs (7) étant répartis le long de l'axe X, la pluralité de cintres supérieurs (7) comportant au moins deux cintres supérieurs de fixation (7a) présentant chacun deux dispositifs de fixation (8) de part et d'autre du caisson longitudinal (4) pour lier chacun un premier point de fixation (9) d'au moins un réservoir (2) aux cintres supérieurs de fixation (7a) par une liaison pivot glissant d'axe pivot (A2) parallèle à l'axe X, l'axe pivot (A2) étant configuré pour être compris dans un plan perpendiculaire à l'axe Y comportant le centre de gravité (CG) du réservoir (2),
- une pluralité de cintres inférieurs (10) perpendiculaires à l'axe X et fixés à une extrémité inférieure du caisson longitudinal (4), les cintres inférieurs (10) de la pluralité de cintres inférieurs (10) étant répartis le long de l'axe X, la pluralité de cintre inférieurs comportant au moins un cintre inférieur de fixation (10a) présentant deux deuxièmes dispositifs de fixation (11) de part et d'autre du caisson longitudinal (4) pour lier chacun un deuxième point fixation (12) du ou des réservoirs (2) au ou aux cintres inférieurs de fixation (10a), le premier point de fixation (9) et le deuxième point de fixation (12) d'un réservoir (2) étant susceptibles d'être compris dans un plan (P2) perpendiculaire à l'axe Y et comprenant le centre de gravité (CG) dudit réservoir (2).

2. Système selon la revendication 1,
**caractérisé en ce qu'**il comprend deux panneaux supérieurs (14) s'étendant parallèlement à l'axe X et perpendiculairement à l'axe Z, les deux panneaux supérieurs (14) étant disposés symétriquement par rapport au plan de symétrie vertical (P1) de part et d'autre du caisson longitudinal (4), chacun des deux panneaux supérieurs (14) étant fixé aux cintres supérieurs (7).

3. Système selon la revendication 2,
**caractérisé en ce qu'**il comprend au moins deux troisièmes dispositifs de fixation (15) fixés aux deux panneaux supérieurs (14) symétriquement par rapport au plan de symétrie vertical (P1), les au moins deux troisièmes dispositifs de fixation (15) étant configurés pour lier chacun un troisième point de fixation (16) respectif du réservoir (2) à un panneau supérieur (14).

4. Système selon l'une des revendications 1 à 3,
**caractérisé en ce qu'**il comprend deux panneaux inférieurs (17) s'étendant parallèlement à l'axe X et perpendiculairement à l'axe Z, les deux panneaux inférieurs (17) étant disposés symétriquement par rapport au plan de symétrie vertical (P1) de part et d'autre du caisson longitudinal (4), chacun des deux panneaux inférieurs (17) étant fixé aux cintres inférieurs (10).

5. Système selon l'une des revendications 1 à 4,
**caractérisé en ce que** le système de fixation (1) comprend en outre deux longerons supérieurs (73) s'étendant parallèlement à l'axe X et disposés symétriquement de part et d'autre du plan de symétrie vertical (P1), chacun des cintres supérieurs (7) présentant une extrémité longitudinale de chaque côté du plan de symétrie verticale (P1), chacun des deux longerons supérieurs (73) étant fixé à chaque extrémité des cintres supérieurs (7) située du même côté du plan de symétrie vertical (P1).

6. Système selon l'une des revendications 1 à 4,
**caractérisé en ce que** le système de fixation (1) comprend en outre deux longerons inférieurs (13) s'étendant parallèlement à l'axe X et disposés symétriquement de part et d'autre du plan de symétrie vertical (P1), chacun des cintres inférieurs (10) présentant une extrémité longitudinale de chaque côté du plan de symétrie verticale (P1), chacun des deux longerons inférieurs (13) étant fixé à chaque extrémité des cintres supérieurs (10) située du même côté du plan de symétrie vertical (P1).

7. Système selon l'une des revendications 1 à 6,
**caractérisé en ce que** chacun des deux premiers dispositifs de fixation (8) comprend une plaque de fixation double (80) perpendiculaire à l'axe X, la plaque de fixation double (80) est percée d'un orifice permettant le passage de l'axe pivot (A2), la plaque de fixation double (80) étant fixée à une extrémité d'un cintre supérieur de fixation (7a).

8. Système selon l'une des revendications 1 à 7,
**caractérisé en ce que** chacun des deux deuxièmes dispositifs de fixation (11) comprend :
- une première plaque triangulaire double (19) comprise dans un plan vertical perpendiculaire à l'axe X, la première plaque triangulaire double (19) étant fixée à un cintre inférieur de fixation (10a) par un côté de fixation (C1) de la première plaque triangulaire double (19), le côté de fixation (C1) étant opposé à un sommet de fixation (S1) de la première plaque triangulaire double (19),
- deux premières biellettes doubles (20) parallèles à l'axe Y, les deux premières biellettes doubles (20) présentant une première extrémité (20a) liée au sommet de fixation (S1) par une première liaison pivot (L1) d'axe X, les deux premières biellettes doubles (20) présentant une deuxième extrémité (20b) destinée à être liée au réservoir (2) par une deuxième liaison pivot (L2) d'axe X.

9. Système selon l'une des revendications 3 à 8,
**caractérisé en ce que** chacun des deux troisièmes dispositifs de fixation (15) comprend :
- une deuxième plaque triangulaire double (21) comprise dans un plan vertical perpendiculaire à l'axe Y, la deuxième plaque triangulaire double (21) étant fixée au panneau supérieur (14) par un côté de fixation (C2) de la deuxième plaque triangulaire double (21), le côté de fixation (C2) étant opposé à un sommet de fixation (S2) de la deuxième plaque triangulaire double (21),
- deux deuxièmes biellettes doubles (22) parallèles à l'axe X, les deux deuxièmes biellettes doubles (22) présentant une première extrémité (22a) liée au sommet de fixation (S2) par une première liaison pivot (L3) d'axe Y, les deux deuxièmes biellettes doubles (22) présentant une deuxième extrémité (22b) destinée à être liée au réservoir (2) par une deuxième liaison pivot (L4) d'axe Y.

10. Système selon l'une des revendications 1 à 9,
**caractérisé en ce que** le caisson longitudinal (4) comprend au moins deux plaques longitudinales (5, 6) parallèles au plan de symétrie vertical (P1) et symétriques l'un par rapport à l'autre par rapport au plan de symétrie vertical (P1).

11. Système selon l'une des revendication 1 à 10,
**caractérisé en ce que** chacun des cintres supérieurs (7) comprenant une paire de demi-cintres supérieurs (71) fixés au caisson longitudinal (4) symétriquement de part et d'autre du plan de symétrie vertical (P1) et un centre de cintre supérieur (72) fixé entre les demi-cintres supérieurs (71) et entre les deux plaques longitudinales (5, 6),
chacun des cintres inférieurs (10) comprenant une paire de demi-cintres inférieurs (101) fixés au caisson longitudinal (4) symétriquement de part et d'autre du plan de symétrie vertical (P1) et un centre de cintre inférieur (102) fixé entre les demi-cintres inférieurs (101) et entre les deux plaques longitudinales (5, 6).

12. Système selon a revendication 11,
**caractérisé en ce que** le demi-cintre supérieur (71) de chacune des paires de demi-cintres supérieurs (71) comporte dans un plan vertical perpendiculaire au plan de symétrie vertical (P1) un montant vertical (23), une traverse horizontale (24), une entretoise (25) et une poutre cintrée (26),
le montant vertical (23) étant fixé à une plaque longitudinale (5, 6) du caisson longitudinal (4), la poutre cintrée (26) s'étendant à partir de l'extrémité supérieure du montant vertical (23),
la poutre cintrée (26) étant configurée pour épouser une surface interne d'une coque supérieure (27) du corps de fuselage (3) de l'aéronef (AC) et pour être fixée à ladite surface interne,
la traverse horizontale (24) s'étendant à partir de l'extrémité inférieure du montant vertical (23),
la poutre cintrée (26) et la traverse horizontale (24) se rapprochant l'une de l'autre à l'opposé du caisson longitudinal (4) et sont reliées entre elles par l'intermédiaire de l'entretoise (25),
chacun des deux longerons supérieurs (73) étant fixé à l'entretoise (25) de chacun des demi-cintres supérieurs (71) située du même côté du plan de symétrie vertical (P1),
chacun des deux panneaux supérieurs (14) étant fixé à la traverse horizontal (24) de chacun des demi-cintres supérieurs (71) situés du même côté du plan de symétrie vertical (P1),
le centre de cintre supérieur (72) de chacun des cintres supérieurs (7) présentant une forme rectangulaire dont deux côtés opposés (28) sont fixés respectivement à une plaque longitudinale (5, 6) du caisson longitudinal (4) de façon qu'une extrémité supérieure du montant vertical (23) soit à la hauteur d'un côté supérieur (29) du centre de cintre supérieur (72) et qu'une extrémité inférieure du montant vertical (23) soit à la hauteur d'un côté inférieur (30) du centre de cintre supérieur (72).

13. Système selon l'une des revendications 11 et 12,
**caractérisé en ce que** le demi-cintre inférieur (101) de chacune des paires de demi-cintres inférieurs (101) comporte dans un plan vertical perpendiculaire au plan de symétrie vertical (P1) une traverse horizontale (31) et une poutre cintrée (32),
le centre de cintre inférieur (102) de chacun des cintres inférieurs (10) présentant une forme rectangulaire dont deux côtés opposés (36) sont fixés respectivement à une plaque longitudinale (5, 6) du caisson longitudinal (4) entre les deux plaques longitudinales (5, 6),
la poutre cintrée (32) présentant une première extrémité fixée à une plaque longitudinale (5, 6) du caisson longitudinal (4) à la hauteur d'un côté inférieur (34) du centre de cintre inférieur (102), la poutre cintrée (32) étant configurée pour épouser une surface interne d'une coque inférieure (33) du corps de fuselage (3) de l'aéronef (AC) et pour être fixée à ladite surface interne,
la traverse horizontale (31) présentant une première extrémité fixée à la plaque longitudinale (5, 6) du caisson longitudinal (4) à la hauteur d'un côté supérieur (35) du centre de cintre inférieur (102),
la poutre cintrée (32) et la traverse horizontale se rapprochant l'une de l'autre à l'opposé de leur première extrémité respective et sont reliées entre elles à leur deuxième extrémité par l'intermédiaire du longeron inférieur (13) situé du même côté du plan de symétrie vertical (P1),
chacun des deux panneaux inférieurs (17) étant fixé à la traverse horizontal (31) de chacun des demi-cintres inférieurs (101) situés du même côté du plan de symétrie vertical (P1).

14. Aéronef,
comportant un fuselage (F) intégrant un système de fixation (1) selon l'une quelconque des revendications 1 à 13.

15. Aéronef selon la revendication 14,
**caractérisé en ce qu'**il comprend au moins un réservoir (2) prévu pour contenir de l'hydrogène liquide, le ou les réservoirs étant fixés au système de fixation (1).

## Patentansprüche

1. Befestigungssystem (1), welches dafür ausgelegt ist, mindestens einen Tank (2) zu befestigen, der dafür vorgesehen ist, flüssigen Wasserstoff zu enthalten, wobei der oder die Tanks (2) einen Schwerpunkt (CG) aufweisen, wobei das Befestigungssystem (1) dazu bestimmt ist, in einen Rumpfkörper (3) eines Luftfahrzeugs (AC) integriert zu werden, wobei das Befestigungssystem (1) mit einem orthogonalen Koordinatensystem (R) verknüpft ist, das durch eine X-Achse, die dazu bestimmt ist, parallel zu einer Längsachse (A1) des Rumpfkörpers (3) zu sein, eine horizontale Y-Achse und eine vertikale Z-Achse definiert ist, wobei das Befestigungssystem (1) eine vertikale Symmetrieebene (P1) aufweist, die zur Y-Achse senkrecht ist, wobei das Befestigungssystem umfasst:
- einen Längskasten (4), der sich parallel zur X-Achse erstreckt und eine Symmetrieebene aufweist, die mit der vertikalen Symmetrieebene (P1) zusammenfällt,
- eine Mehrzahl von oberen Bögen (7), die zur X-Achse senkrecht und an einem oberen Ende des Längskastens (4) befestigt sind, wobei die oberen Bögen (7) der Mehrzahl von oberen Bögen (7) entlang der X-Achse verteilt sind, wobei die Mehrzahl von oberen Bögen (7) mindestens zwei obere Befestigungsbögen (7a) umfasst, die jeweils zwei Befestigungsvorrichtungen (8) beiderseits des Längskastens (4) aufweisen, um jeweils einen ersten Befestigungspunkt (9) mindestens eines Tanks (2) mit den oberen Befestigungsbögen (7a) durch eine gleitende Schwenkverbindung mit einer zur X-Achse parallelen Schwenkachse (A2) zu verbinden, wobei die Schwenkachse (A2) so ausgebildet ist, dass sie in einer zur Y-Achse senkrechten Ebene verläuft, die den Schwerpunkt (CG) des Tanks (2) enthält,
- eine Mehrzahl von unteren Bögen (10), die zur X-Achse senkrecht und an einem unteren Ende des Längskastens (4) befestigt sind, wobei die unteren Bögen (10) der Mehrzahl von unteren Bögen (10) entlang der X-Achse verteilt sind, wobei die Mehrzahl von unteren Bögen mindestens einen unteren Befestigungsbogen (10a) umfasst, der zwei zweite Befestigungsvorrichtungen (11) beiderseits des Längskastens (4) aufweist, um jeweils einen zweiten Befestigungspunkt (12) des oder der Tanks (2) mit dem oder mit den unteren Befestigungsbögen (10a) zu verbinden, wobei der erste Befestigungspunkt (9) und der zweite Befestigungspunkt (12) eines Tanks (2) in einer Ebene (P2) enthalten sein können, die zur Y-Achse senkrecht ist und den Schwerpunkt (CG) des Tanks (2) enthält.

2. System nach Anspruch 1,
**dadurch gekennzeichnet, dass** es zwei obere Platten (14) umfasst, die sich parallel zur X-Achse und senkrecht zur Z-Achse erstrecken, wobei die zwei oberen Platten (14) symmetrisch bezüglich der vertikalen Symmetrieebene (P1) beiderseits des Längskastens (4) angeordnet sind, wobei jede der zwei oberen Platten (14) an den oberen Bögen (7) befestigt ist.

3. System nach Anspruch 2,
**dadurch gekennzeichnet, dass** es mindestens zwei dritte Befestigungsvorrichtungen (15) umfasst, die an den zwei oberen Platten (14) symmetrisch bezüglich der vertikalen Symmetrieebene (P1) befestigt sind, wobei die mindestens zwei dritten Befestigungsvorrichtungen (15) dafür ausgelegt sind, jeweils einen jeweiligen dritten Befestigungspunkt (16) des Tanks (2) mit einer oberen Platte (14) zu verbinden.

4. System nach einem der Ansprüche 1 bis 3,
**dadurch gekennzeichnet, dass** es zwei untere Platten (17) umfasst, die sich parallel zur X-Achse und senkrecht zur Z-Achse erstrecken, wobei die zwei unteren Platten (17) symmetrisch bezüglich der vertikalen Symmetrieebene (P1) beiderseits des Längskastens (4) angeordnet sind, wobei jede der zwei unteren Platten (17) an den unteren Bögen (10) befestigt ist.

5. System nach einem der Ansprüche 1 bis 4,
**dadurch gekennzeichnet, dass** das Befestigungssystem (1) außerdem zwei obere Längsträger (73) umfasst, die sich parallel zur X-Achse erstrecken und symmetrisch beiderseits der vertikalen Symmetrieebene (P1) angeordnet sind, wobei jeder der oberen Bögen (7) ein Längsende auf jeder Seite der vertikalen Symmetrieebene (P1) aufweist, wobei jeder der zwei oberen Längsträger (73) an jedem Ende der oberen Bögen (7) befestigt ist, das sich auf derselben Seite der vertikalen Symmetrieebene (P1) befindet.

6. System nach einem der Ansprüche 1 bis 4,
**dadurch gekennzeichnet, dass** das Befestigungssystem (1) außerdem zwei untere Längsträger (13) umfasst, die sich parallel zur X-Achse erstrecken und symmetrisch beiderseits der vertikalen Symmetrieebene (P1) angeordnet sind, wobei jeder der unteren Bögen (10) ein Längsende auf jeder Seite der vertikalen Symmetrieebene (P1) aufweist, wobei jeder der zwei unteren Längsträger (13) an jedem Ende der unteren Bögen (10) befestigt ist, das sich auf derselben Seite der vertikalen Symmetrieebene (P1) befindet.

7. System nach einem der Ansprüche 1 bis 6,
**dadurch gekennzeichnet, dass** jede der zwei ersten Befestigungsvorrichtungen (8) eine Doppelbefestigungsplatte (80) umfasst, die zur X-Achse senkrecht ist, wobei die Doppelbefestigungsplatte (80) mit einer Öffnung versehen ist, die den Durchgang der Schwenkachse (A2) ermöglicht, wobei die Doppelbefestigungsplatte (80) an einem Ende eines oberen Befestigungsbogens (7a) befestigt ist.

8. System nach einem der Ansprüche 1 bis 7,
**dadurch gekennzeichnet, dass** jede der zwei zweiten Befestigungsvorrichtungen (11) umfasst:
- eine erste dreieckige Doppelplatte (19), die in einer zur X-Achse senkrechten vertikalen Ebene enthalten ist, wobei die erste dreieckige Doppelplatte (19) an einem unteren Befestigungsbogen (10a) auf einer Befestigungsseite (C1) der ersten dreieckigen Doppelplatte (19) befestigt ist, wobei die Befestigungsseite (C1) einer Befestigungsspitze (S1) der ersten dreieckigen Doppelplatte (19) gegenüberliegt,
- zwei erste Doppel-Schwingarme (20), die zur Y-Achse parallel sind, wobei die zwei ersten Doppel-Schwingarme (20) ein erstes Ende (20a) aufweisen, das mit der Befestigungsspitze (S1) über eine erste Schwenkverbindung (L1) verbunden ist, deren Achse die X-Achse ist, wobei die zwei ersten Doppel-Schwingarme (20) ein zweites Ende (20b) aufweisen, das dazu bestimmt ist, mit dem Tank (2) durch eine zweite Schwenkverbindung (L2) verbunden zu werden, die zur X-Achse parallel ist.

9. System nach einem der Ansprüche 3 bis 8,
**dadurch gekennzeichnet, dass** jede der zwei dritten Befestigungsvorrichtungen (15) umfasst:
- eine zweite dreieckige Doppelplatte (21), die in einer zur Y-Achse senkrechten vertikalen Ebene enthalten ist, wobei die zweite dreieckige Doppelplatte (21) an der oberen Platte (14) auf einer Befestigungsseite (C1) der zweiten dreieckigen Doppelplatte (21) befestigt ist, wobei die Befestigungsseite (C2) einer Befestigungsspitze (S2) der zweiten dreieckigen Doppelplatte (21) gegenüberliegt,
- zwei zweite Doppel-Schwingarme (22), die zur X-Achse parallel sind, wobei die zwei zweiten Doppel-Schwingarme (22) ein erstes Ende (22a) aufweisen, das mit der Befestigungsspitze (S2) über eine erste Schwenkverbindung (L3) verbunden ist, die zur Y-Achse parallel ist, wobei die zwei zweiten Doppel-Schwingarme (22) ein zweites Ende (22b) aufweisen, das dazu bestimmt ist, mit dem Tank (2) durch eine zweite Schwenkverbindung (L4) verbunden zu werden, die zur Y-Achse parallel ist.

10. System nach einem der Ansprüche 1 bis 9,
**dadurch gekennzeichnet, dass** der Längskasten (4) mindestens zwei Längsplatten (5, 6) umfasst, die zu der vertikalen Symmetrieebene (P1) parallel sind und symmetrisch zueinander bezüglich der vertikalen Symmetrieebene (P1) sind.

11. System nach einem der Ansprüche 1 bis 10,
**dadurch gekennzeichnet, dass** jeder der oberen Bögen (7) ein Paar obere Bogenhälften (71), die am Längskasten (4) symmetrisch beiderseits der vertikalen Symmetrieebene (P1) befestigt sind, und ein oberes Bogenzentrum (72), das zwischen den oberen Bogenhälften (71) und zwischen den zwei Längsplatten (5, 6) befestigt ist, umfasst,
wobei jeder der unteren Bögen (10) ein Paar untere Bogenhälften (101), die am Längskasten (4) symmetrisch beiderseits der vertikalen Symmetrieebene (P1) befestigt sind, und ein unteres Bogenzentrum (102), das zwischen den unteren Bogenhälften (101) und zwischen den zwei Längsplatten (5, 6) befestigt ist, umfasst.

12. System nach Anspruch 11,
**dadurch gekennzeichnet, dass** die obere Bogenhälfte (71) jedes der Paare von oberen Bogenhälften (71) in einer zur vertikalen Symmetrieebene (P1) senkrechten vertikalen Ebene eine vertikale Stütze (23), eine horizontale Querstrebe (24), einen Quersteg (25) und einen bogenförmigen Träger (26) umfasst,
wobei die vertikale Stütze (23) an einer Längsplatte (5, 6) des Längskastens (4) befestigt ist, wobei sich der bogenförmige Träger (26) vom oberen Ende der vertikalen Stütze (23) aus erstreckt,
wobei der bogenförmige Träger (26) dafür ausgelegt ist, sich an eine Innenfläche einer oberen Schale (27) des Rumpfkörpers (3) des Luftfahrzeugs (AC) anzupassen und an dieser Innenfläche befestigt zu werden,
wobei sich die horizontale Querstrebe (24) vom unteren Ende der vertikalen Stütze (23) aus erstreckt,
wobei der bogenförmige Träger (26) und die horizontale Querstrebe (24) sich gegenüber dem Längskasten (4) einander nähern und über den Quersteg (25) miteinander verbunden sind,
wobei jeder der zwei oberen Längsträger (73) an dem Quersteg (25) jeder der oberen Bogenhälften (71) befestigt ist, der sich auf derselben Seite der vertikalen Symmetrieebene (P1) befindet,
wobei jede der zwei oberen Platten (14) an der horizontalen Querstrebe (24) jeder der oberen Bogenhälften (71) befestigt ist, die sich auf derselben Seite der vertikalen Symmetrieebene (P1) befinden,
wobei das obere Bogenzentrum (72) jedes der oberen Bögen (7) eine rechteckige Form aufweist, von der zwei gegenüberliegende Seiten (28) jeweils an einer Längsplatte (5, 6) des Längskastens (4) so befestigt sind, dass sich ein oberes Ende der vertikalen Stütze (23) auf der Höhe einer oberen Seite (29) des oberen Bogenzentrums (72) befindet und dass sich ein unteres Ende der vertikalen Stütze (23) auf der Höhe einer unteren Seite (30) des oberen Bogenzentrums (72) befindet.

13. System nach einem der Ansprüche 11 und 12,
**dadurch gekennzeichnet, dass** die untere Bogenhälfte (101) jedes der Paare von unteren Bogenhälften (101) in einer zur vertikalen Symmetrieebene (P1) senkrechten vertikalen Ebene eine horizontale Querstrebe (31) und einen bogenförmigen Träger (32) umfasst,
wobei das untere Bogenzentrum (102) jedes der unteren Bögen (10) eine rechteckige Form aufweist, von der zwei gegenüberliegende Seiten (36) jeweils an einer Längsplatte (5, 6) des Längskastens (4) zwischen den zwei Längsplatten (5, 6) befestigt sind,
wobei der bogenförmige Träger (32) ein erstes Ende aufweist, das an einer Längsplatte (5, 6) des Längskastens (4) auf der Höhe einer unteren Seite (34) des unteren Bogenzentrums (102) befestigt ist, wobei der bogenförmige Träger (32) dafür ausgelegt ist, sich an eine Innenfläche einer unteren Schale (33) des Rumpfkörpers (3) des Luftfahrzeugs (AC) anzupassen und an dieser Innenfläche befestigt zu werden,
wobei die horizontale Querstrebe (31) ein erstes Ende aufweist, das an der Längsplatte (5, 6) des Längskastens (4) auf der Höhe einer oberen Seite (35) des unteren Bogenzentrums (102) befestigt ist,
wobei der bogenförmige Träger (32) und die horizontale Querstrebe sich gegenüber ihrem jeweiligen ersten Ende einander nähern und an ihrem zweiten Ende über den unteren Längsträger (13) miteinander verbunden sind, der sich auf derselben Seite der vertikalen Symmetrieebene (P1) befindet,
wobei jede der zwei unteren Platten (17) an der horizontalen Querstrebe (31) jeder der unteren Bogenhälften (101) befestigt ist, die sich auf derselben Seite der vertikalen Symmetrieebene (P1) befinden.

14. Luftfahrzeug,
welches einen Rumpf (F) aufweist, in den ein Befestigungssystem (1) nach einem der Ansprüche 1 bis 13 integriert ist.

15. Luftfahrzeug nach Anspruch 14,
**dadurch gekennzeichnet, dass** es mindestens einen Tank (2) umfasst, der dafür vorgesehen ist, flüssigen Wasserstoff zu enthalten, wobei der oder die Tanks an dem Befestigungssystem (1) befestigt sind.

## Claims

1. Fastening system (1) configured to fasten at least one tank (2) intended to contain liquid hydrogen, the tank or tanks (2) having a centre of gravity (CG), the fastening system (1) being intended to be integrated into a fuselage body (3) of an aircraft (AC), the fastening system (1) being linked to an orthogonal frame of reference (R) defined by an axis X intended to be parallel to a longitudinal axis (A1) of the fuselage body (3), a horizontal axis Y and a vertical axis Z, the fastening system (1) having a vertical plane of symmetry (P1) perpendicular to the axis Y, the fastening system comprising:
- a longitudinal box (4) extending parallel to the axis X and having a plane of symmetry that is coincident with the vertical plane of symmetry (P1),
- a plurality of upper formers (7) perpendicular to the axis X and fastened to an upper end of the longitudinal box (4), the upper formers (7) of the plurality of upper formers (7) being distributed along the axis X, the plurality of upper formers (7) comprising at least two fastening upper formers (7a) each having two fastening devices (8) on either side of the longitudinal box (4) in order to each connect a first fastening point (9) of at least one tank (2) to the fastening upper formers (7a) by a sliding pivot connection of pivot axis (A2) parallel to the axis X, the pivot axis (A2) being configured to be comprised in a plane perpendicular to the axis Y comprising the centre of gravity (CG) of the tank (2),
- a plurality of lower formers (10) perpendicular to the axis X and fastened to a lower end of the longitudinal box (4), the lower formers (10) of the plurality of lower formers (10) being distributed along the axis X, the plurality of lower formers comprising at least one fastening lower former (10a) having two second fastening devices (11) on either side of the longitudinal box (4) in order to each connect a second fastening point (12) of the tank or tanks (2) to the fastening lower former or formers (10a), the first fastening point (9) and the second fastening point (12) of a tank (2) being capable of being comprised in a plane (P2) perpendicular to the axis Y and comprising the centre of gravity (CG) of said tank (2).

2. System according to Claim 1,
**characterized in that** it comprises two upper panels (14) extending parallel to the axis X and perpendicular to the axis Z, the two upper panels (14) being disposed symmetrically with respect to the vertical plane of symmetry (P1) on either side of the longitudinal box (4), each of the two upper panels (14) being fastened to the upper formers (7).

3. System according to Claim 2,
**characterized in that** it comprises at least two third fastening devices (15) fastened to the two upper panels (14) symmetrically with respect to the vertical plane of symmetry (P1), the at least two third fastening devices (15) being configured to each connect a respective third fastening point (16) of the tank (2) to an upper panel (14).

4. System according to one of Claims 1 to 3,
**characterized in that** it comprises two lower panels (17) extending parallel to the axis X and perpendicular to the axis Z, the two lower panels (17) being disposed symmetrically with respect to the vertical plane of symmetry (P1) on either side of the longitudinal box (4), each of the two lower panels (17) being fastened to the lower formers (10).

5. System according to one of Claims 1 to 4,
**characterized in that** the fastening system (1) further comprises two upper longerons (73) extending parallel to the axis X and disposed symmetrically on either side of the vertical plane of symmetry (P1), each of the upper formers (7) having a longitudinal end on each side of the vertical plane of symmetry (P1), each of the two upper longerons (73) being fastened to each end of the upper formers (7) that is situated on the same side of the vertical plane of symmetry (P1).

6. System according to one of Claims 1 to 4,
**characterized in that** the fastening system (1) further comprises two lower longerons (13) extending parallel to the axis X and disposed symmetrically on either side of the vertical plane of symmetry (P1), each of the lower formers (10) having a longitudinal end on each side of the vertical plane of symmetry (P1), each of the two lower longerons (13) being fastened to each end of the lower formers (10) that is situated on the same side of the vertical plane of symmetry (P1).

7. System according to one of Claims 1 to 6,
**characterized in that** each of the two first fastening devices (8) comprises a double fastening plate (80) perpendicular to the axis X, the double fastening plate (80) is pierced with an orifice allowing the passage of the pivot axis (A2), the double fastening plate (80) being fastened to an end of a fastening upper former (7a).

8. System according to one of Claims 1 to 7,
**characterized in that** each of the two second fastening devices (11) comprises:
- a first triangular double plate (19) comprised in a vertical plane perpendicular to the axis X, the first triangular double plate (19) being fastened to a fastening lower former (10a) by a fastening side (C1) of the first triangular double plate (19), the fastening side (C1) being opposite to a fastening vertex (S1) of the first triangular double plate (19),
- two first double link rods (20) parallel to the axis Y, the two first double link rods (20) having a first end (20a) connected to the fastening vertex (S1) by a first pivot connection (L1) of axis X, the two first double link rods (20) having a second end (20b) intended to be connected to the tank (2) by a second pivot connection (L2) of axis X.

9. System according to one of Claims 3 to 8,
**characterized in that** each of the two third fastening devices (15) comprises:
- a second triangular double plate (21) comprised in a vertical plane perpendicular to the axis Y, the second triangular double plate (21) being fastened to the upper panel (14) by a fastening side (C2) of the second triangular double plate (21), the fastening side (C2) being opposite to a fastening vertex (S2) of the second triangular double plate (21),
- two second double link rods (22) parallel to the axis X, the two second double link rods (22) having a first end (22a) connected to the fastening vertex (S2) by a first pivot connection (L3) of axis Y, the two second double link rods (22) having a second end (22b) intended to be connected to the tank (2) by a second pivot connection (L4) of axis Y.

10. System according to one of Claims 1 to 9,
**characterized in that** the longitudinal box (4) comprises at least two longitudinal plates (5, 6) that are parallel to the vertical plane of symmetry (P1) and that are symmetrical to one another with respect to the vertical plane of symmetry (P1).

11. System according to one of Claims 1 to 10,
**characterized in that** each of the upper formers (7) comprises a pair of upper half-formers (71) fastened to the longitudinal box (4) symmetrically on either side of the vertical plane of symmetry (P1) and an upper former centre (72) fastened between the upper half-formers (71) and between the two longitudinal plates (5, 6),
each of the lower formers (10) comprising a pair of lower half-formers (101) fastened to the longitudinal box (4) symmetrically on either side of the vertical plane of symmetry (P1) and a lower former centre (102) fastened between the lower half-formers (101) and between the two longitudinal plates (5, 6).

12. System according to Claim 11,
**characterized in that** the upper half-former (71) of each of the pairs of upper half-formers (71) comprises, in a vertical plane perpendicular to the vertical plane of symmetry (P1), a vertical upright (23), a horizontal crossmember (24), a spacer (25) and a curved beam (26),
the vertical upright (23) being fastened to a longitudinal plate (5, 6) of the longitudinal box (4), the curved beam (26) extending from the upper end of the vertical upright (23),
the curved beam (26) being configured to conform to an inner surface of an upper shell (27) of the fuselage body (3) of the aircraft (AC) and to be fastened to said inner surface,
the horizontal crossmember (24) extending from the lower end of the vertical upright (23),
the curved beam (26) and the horizontal crossmember (24) approaching one another in the direction away from the longitudinal box (4) and are connected to one another by way of the spacer (25),
each of the two upper longerons (73) being fastened to the spacer (25) of each of the upper half-formers (71) that is situated on the same side of the vertical plane of symmetry (P1),
each of the two upper panels (14) being fastened to the horizontal crossmember (24) of each of the upper half-formers (71) that are situated on the same side of the vertical plane of symmetry (P1),
the upper former centre (72) of each of the upper formers (7) having a rectangular shape, two opposite sides (28) of which are fastened respectively to a longitudinal plate (5, 6) of the longitudinal box (4) such that an upper end of the vertical upright (23) is at the height of an upper side (29) of the upper former centre (72) and a lower end of the vertical upright (23) is at the height of a lower side (30) of the upper former centre (72).

13. System according to one of Claims 11 and 12,
**characterized in that** the lower half-former (101) of each of the pairs of lower half-formers (101) comprises, in a vertical plane perpendicular to the vertical plane of symmetry (P1), a horizontal crossmember (31) and a curved beam (32),
the lower former centre (102) of each of the lower formers (10) having a rectangular shape, two opposite sides (36) of which are fastened respectively to a longitudinal plate (5, 6) of the longitudinal box (4) between the two longitudinal plates (5, 6),
the curved beam (32) having a first end fastened to a longitudinal plate (5, 6) of the longitudinal box (4) at the height of a lower side (34) of the lower former centre (102), the curved beam (32) being configured to conform to an inner surface of a lower shell (33) of the fuselage body (3) of the aircraft (AC) and to be fastened to said inner surface,
the horizontal crossmember (31) having a first end fastened to the longitudinal plate (5, 6) of the longitudinal box (4) at the height of an upper side (35) of the lower former centre (102),
the curved beam (32) and the horizontal crossmember approaching one another in the direction away from their respective first end and are connected to one another at their second end by way of the lower longeron (13) situated on the same side of the vertical plane of symmetry (P1),
each of the two lower panels (17) being fastened to the horizontal crossmember (31) of each of the lower half-formers (101) that are situated on the same side of the vertical plane of symmetry (P1).

14. Aircraft,
comprising a fuselage (F) into which a fastening system (1) according to any one of Claims 1 to 13 is integrated.

15. Aircraft according to Claim 14,
**characterized in that** it comprises at least one tank (2) intended to contain liquid hydrogen, the tank or tanks being fastened to the fastening system (1).
